# EUROPEAN PATENT APPLICATION

(11) **EP 2 523 180 A1**
(43) Date of publication of application: **14.11.2012**
(21) Application number: 10842226.2
(22) Date of filing: 27.12.2010
(51) Int. Cl.: G09F 9/00, G02F 1/1333

(54) **PORTABLE INFORMATION DISPLAY TERMINAL**

(30) Priority: 05.01.2010 JP 2010000637
(71) Applicant: Funai Electric Co., Ltd., Daito-shi Osaka 574-0013 (JP)
(72) Inventor: MASAKI, Yasuo, Daito-shi Osaka 574-0013 (JP); KOHNO, Sei, Daito-shi Osaka 574-0013 (JP)
(74) Representative: Grünecker, Kinkeldey, Stockmair & Schwanhäusser
(86) International application number: PCT/JP2010/073559
(87) International publication number: WO 2011/083715

(57) **Abstract**

A support portion (21, 22, 23) of the disclosed portable information display terminal (1) is formed to be capable of supporting a housing (20) by constituting a bottom portion support portion (21b, 22b, 23b) in a state standing up the housing and a display portion (10) and to be capable of supporting the housing in a state inclining the housing and the display portion by a prescribed angle with respect to a placing surface (100) in a state laying down the housing and the display portion.

## Description

### Technical Field

The present invention relates to a portable information display terminal, and more particularly, it relates to a portable information display terminal including a display portion and a housing provided with the display portion.

### Background Technique

A portable information display terminal including a display portion and a housing provided with the display portion is known in general. Such a portable information display terminal is disclosed in Japanese Patent Laying-Open No. 2000-122569, for example.

In the aforementioned Japanese Patent Laying-Open No. 2000-122569, there is disclosed a portable liquid crystal display (portable information display terminal) including a liquid crystal display portion and a case (housing) provided with the liquid crystal display portion on a surface thereof. The portable liquid crystal display according to the aforementioned Japanese Patent Laying-Open No. 2000-122569 is provided with a protrusion protruding from the same surface as the surface of the case provided with the liquid crystal display portion in a direction orthogonal to the surface of the case provided with the liquid crystal display portion and formed integrally with the case. This protrusion is formed to be capable of supporting the case in a state standing up the liquid crystal display portion.

### Prior Art

### Patent Document

Patent Document 1: Japanese Patent Laying-Open No. 2000-122569

### Summary of the Invention

### Problems to be Solved by the Invention

However, while the portable liquid crystal display (portable information display terminal) according to the aforementioned Japanese Patent Laying-Open No. 2000-122569 is capable of stably supporting the case in a state standing up the liquid crystal display portion with the protrusion formed integrally with the case (housing) and usable in a stood-up state, there is such a problem that the liquid crystal display portion is positioned on a placing surface side and hence the portable liquid crystal display cannot be used in a case of supporting the portable liquid crystal display with the protrusion in a state laying down the liquid crystal display portion.

The present invention has been proposed in order to solve the aforementioned problem, and an object of the present invention is to provide a portable information display terminal stably supportable and usable at least in both states of a stood-up state and a laid-down state. Means for Solving the Problems and Effects of the Invention

A portable information display terminal according to an aspect of the present invention includes a display portion displaying information and a housing provided with the display portion on a surface, while a support portion having a larger thickness than on a second end portion side is integrally provided at least on a first end portion side on a surface of the housing opposite to the surface provided with the display portion, and the support portion is formed to be capable of supporting the housing by constituting a bottom portion support portion in a state standing up the housing and the display portion and to be capable of supporting the housing in a state inclining the housing and the display portion by a prescribed angle with respect to a placing surface in a state laying down the housing and the display portion.

In the portable information display terminal according to this aspect, as hereinabove described, the support portion having the larger thickness than the second end portion side is integrally provided at least on the first end portion side so that the support portion supports the housing on the side opposite to the surface of the housing provided with the display portion in the case of the state laying down the housing and the display portion, whereby the support portion can stably support the housing in a state where the display portion inclines by the prescribed angle with respect to the placing surface so that the first end portion side heightens and the display portion is directed upward (toward the user side). In the case of standing up the housing and the display portion, the support portion on the first end portion side of the housing is constituted as the bottom portion support portion, whereby the support portion on the first end portion side of the housing constituted as the bottom portion support portion can support the housing in a state placing the first end portion side of the housing on the placing surface and in the state standing up the display portion. Thus, a portable information display terminal stably supportable and usable in both states of at least a stood-up state and a laid-down state can be obtained.

Preferably in the portable information display terminal according to the aforementioned aspect, the support portion includes a first support portion provided in the vicinity of an end portion in a first direction of the housing and capable of constituting a grasp portion for manually grasping the housing in a state laterally directing the first direction of the housing and the display portion. When forming the portable information display terminal in this manner, the user can operate the portable information display terminal not only in the state standing up the housing and the display portion and the state laying down the housing and the display portion, but also in a state manually grasping the first support portion of the housing.

Preferably in the aforementioned portable information display terminal provided with the first support portion, the first support portions are provided in the vicinity of both end portions in the first direction of the housing. When forming the portable information display terminal in this manner, the user can grasp the portable information display terminal in a stable state by grasping the first support portions of two places provided in the vicinity of both end portions in the first direction of the housing.

Preferably in the aforementioned portable information display terminal provided with the first support portion, the first support portion is so formed that the thickness gradually increases from the second end portion side of the housing toward the first end portion side. When forming the portable information display terminal in this manner, the first support portion can support the housing in the state inclining the housing and the display portion by the prescribed angle with respect to the placing surface to gradually heighten from the second end portion side of the housing toward the first end portion side in the case of laying down the housing and the display portion.

Preferably in the aforementioned portable information display terminal provided with the first support portion, the support portion includes a second support portion provided in the vicinity of a first end portion in a second direction of the housing substantially orthogonal to the first direction of the housing. When forming the portable information display terminal in this manner, the second support portion provided in the vicinity of the first end portion in the second direction of the housing can support the housing in both of the state standing up the housing and the display portion and the state laying down the housing and the display portion.

Preferably in the aforementioned portable information display terminal including the support portion including the second support portion, the second support portion includes a convexed portion protruding from the vicinity of the first end portion in the second direction of the housing. When forming the portable information display terminal in this manner, the convexed portion protruding from the vicinity of the first end portion in the second direction of the housing can support the housing in the state inclining the housing and the display portion by the prescribed angle with respect to the placing surface so that the first end portion in the second direction of the housing heightens in the case of laying down the housing and the display portion.

Preferably in this case, the convexed portion constituting the second support portion is so formed that a battery is storable therein. When forming the portable information display terminal in this manner, the second support portion can be used both as the support portion supporting the housing and a battery storage portion. Further, the convexed portion is so formed that a battery is storable therein so that the second support portion storing the battery which is a heavy object is positioned in the vicinity of the placing surface in a case of placing the portable information display terminal on the placing surface in the state standing up the display portion and the housing, whereby the center of gravity of the portable information display terminal in the state standing up the display portion and the housing can be lowered toward the placing surface side. Thus, the housing can be more stably supported also in the state standing up the display portion and the housing.

Preferably in the aforementioned portable information display terminal including the support portion including the second support portion, a recess portion is provided between the first support portion and the second support portion. When forming the portable information display terminal in this manner, the user can grasp the first support portion by putting his/her finger on the recess portion between the first support portion and the second support portion, whereby he/she can grasp the housing in a stable state.

Preferably in the aforementioned portable information display terminal including the support portion including the second support portion, the second support portion is so arranged, in a case where a user grasps the left side of the housing with his/her left hand so that the first direction of the housing is the vertical direction and the display portion is on the front side, as to be positioned on a right-side portion opposite to the left hand of the user. The user (particularly a right-handed user) frequently operates a touch panel or the like with his/her right hand in a state grasping the housing with his/her left hand, and in such a case, the second support portion is arranged to be positioned on the right-side portion opposite to the left hand of the user so that the second support portion is not obstructive when the user grasps the housing with his/her left hand, whereby the user can easily grasp the housing with his/her left hand.

Preferably in the portable information display terminal according to the aforementioned aspect, the display portion is so formed that the direction of display is changeable in response to a used state. When forming the portable information display terminal in this manner, the display direction can be changed in response to a mode of use such as the direction or the state of the housing and the display portion, whereby display in a direction suitable to the mode of use can be obtained.

Preferably in this case, the support portion includes a first support portion provided in the vicinity of an end portion in a first direction of the housing and capable of constituting a grasp portion for manually grasping the housing in a state laterally directing the first direction of the housing and the display portion, the first support portion is so provided that the thickness gradually increases from the second end portion side of the housing toward the first end portion side, and the display portion is formed to display an image so that the first end portion side of the housing is downward in the state standing up the housing and the display portion and to display an image so that the second end portion side of the housing opposite to the first end portion side of the housing is downward in the state laying down the housing and the display portion in the state inclining the housing and the display portion by the prescribed angle with respect to the placing surface. When forming the portable information display terminal in this manner, display in directions suitable to arrangement states in both of the state standing up the housing and the display portion and the state laying down the housing and the display portion in the state inclining the housing and the display portion by the prescribed angle with respect to the placing surface can be obtained.

Preferably in the portable information display terminal according to the aforementioned aspect, an antislip member for stably placing the housing on the placing surface in the state standing up the housing and the display portion and for stably placing the housing on the placing surface in the state laying down the housing and the display portion is provided on the support portion. When forming the portable information display terminal in this manner, the antislip member can inhibit the housing from slipping with respect to the placing surface in both of the state standing up the housing and the display portion and the state laying down the housing and the display portion, whereby the housing can be stably placed on the placing surface.

Preferably in this case, the antislip member is provided to extend from a surface of the support member opposed to the placing surface in the state standing up the housing and the display portion to a surface of the support member opposed to the placing surface in the state laying down the housing and the display portion. When forming the portable information display terminal in this manner, the common antislip member can be employed in both of the state standing up the housing and the display portion and the state laying down the housing and the display portion, whereby the number of components can be inhibited from increasing, dissimilarly to a case of providing an antislip member for the state standing up the housing and the display portion and an antislip member for the state laying down the housing and the display portion separately from each other respectively.

Preferably in the aforementioned portable information display terminal provided with the first support portion, the first support portion is so formed that a first side surface of the first support portion on the end portion side in the first direction of the housing inclines to spread from a top surface of the first support portion toward a base portion in the direction of the end portion in the first direction of the housing. When forming the portable information display terminal in this manner, the user can easily fit his/her finger along the first side surface inclining to spread from the top surface of the first support portion toward the base portion in the direction of the end portion in the first direction of the housing when manually grasping the first support portion of the housing in the state laterally directing the first direction, whereby he/she can grasp the housing in a stable state.

Preferably in the aforementioned portable information display terminal provided with the first support portion having the first side surface, the first support portion is so formed that a second side surface of the first support portion on a center side in the first direction of the housing inclines to spread from the top surface of the first support portion toward a base portion in a center direction in the first direction of the housing, and an angle of inclination of the base portion of the second side surface of the first support portion is larger than an angle of inclination of the first side surface of the first support portion. When forming the portable information display terminal in this manner, the user can easily put his/her finger on the second side surface having the angle of inclination larger than the angle of inclination of the base portion of the first side surface of the first support portion when manually grasping the first support portion of the housing in the state laterally directing the first direction, whereby he/she can grasp the housing in a stable state.

Preferably in the aforementioned portable information display terminal provided with the first support portion having the first side surface, a third side surface is provided to protrude on an end portion side of the first side surface of the first support portion in the first direction of the housing, an input/output terminal portion capable of inputting/outputting information is provided on the third side portion, and an angle of inclination of a base portion of the third side surface is larger than the angle of inclination of the base portion of the first side surface. When forming the portable information display terminal in this manner, the third side surface protrudes from the first side surface in the state where the angle of inclination of the base portion is large, whereby the input/output terminal portion can be provided on the third side surface in such arrangement that a connection terminal of an external apparatus can be easily connected.

Preferably in the aforementioned portable information display terminal provided with the first support portion, an opening for outputting a sound output from the inner side of the housing outward is provided on the first support portion. When forming the portable information display terminal in this manner, a sound output from a speaker can be easily output outward through the opening also in a case where the housing includes the speaker outputting the sound therein.

Preferably, the portable information display terminal according to the aforementioned aspect further includes a camera portion provided on a first side in the first direction of the housing. When forming the portable information display terminal in this manner, the camera portion is used in a stably supported state in both of the state where the housing is laid down and the state where the same is stood up, whereby the face of the user or the like can be easily photographed.

Preferably in this case, the portable information display terminal further includes a switch portion provided on a second side in the first direction of the housing for performing a prescribed operation. When forming the portable information display terminal in this manner, the hand of the user operating the switch portion can be inhibited from blocking the field of view of the camera portion provided on the first side in the first direction of the housing when the user operates the switch portion.

Preferably in the portable information display terminal according to the aforementioned aspect, the display portion has a touch panel function. When forming the portable information display terminal in this manner, the user can easily operate the portable information display terminal by employing the touch panel function.

### Brief Description of the Drawings

[Fig. 1] A general perspective view for illustrating the structure of a liquid crystal display portion side of a portable information display terminal according to an embodiment of the present invention.
[Fig. 2] A general perspective view for illustrating the structure of a surface side of a frame opposite to a surface provided with the liquid crystal display portion in the portable information display terminal shown in Fig. 1.
[Fig. 3] A perspective view showing a state at a time when the portable information display terminal is grasped while laterally directing the longitudinal direction of the portable information display terminal shown in Fig. 1.
[Fig. 4] A perspective view showing a state at a time when the portable information display terminal is grasped while vertically directing the longitudinal direction of the portable information display terminal shown in Fig. 1.
[Fig. 5] A perspective view showing the surface side of the portable information display terminal shown in Fig. 1 provided with the liquid crystal display portion, and a perspective view showing a state standing up the frame and the liquid crystal display portion.
[Fig. 6] A perspective view showing the surface side opposite to the surface of the portable information display terminal shown in Fig. 1 provided with the liquid crystal display portion, and a perspective view showing the state standing up the frame and the liquid crystal display portion.
[Fig. 7] A perspective view as viewed from a first side in the longitudinal direction of the portable information display terminal shown in Fig. 1, and a perspective view showing a state laying down the frame and the liquid crystal display portion.
[Fig. 8] A perspective view as viewed from a first side in the short-side direction of the portable information display terminal shown in Fig. 1, and a perspective view showing the state laying down the frame and the liquid crystal display portion.
[Fig. 9] A perspective view as viewed from a second side in the longitudinal direction of the portable information display terminal shown in Fig. 1, and a perspective view showing the state laying down the frame and the liquid crystal display portion.
[Fig. 10] A perspective view for illustrating a protrusion of a portable information display portion according to a modification of the embodiment shown in Figs. 1 to 9.

### Modes for Carrying Out the Invention

An embodiment embodying the present invention is now described on the basis of the drawings.

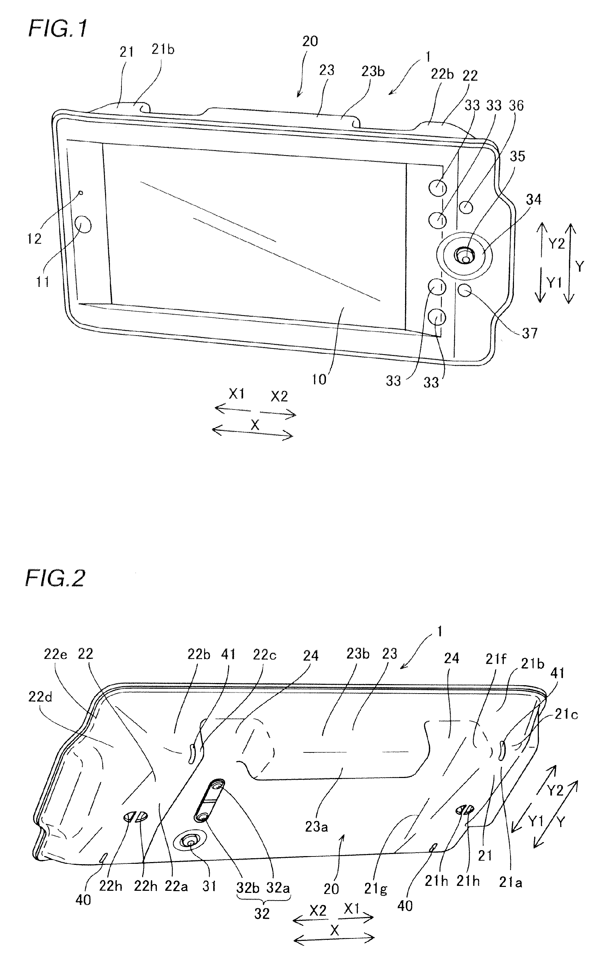

First, the structure of a portable information display terminal 1 according to the embodiment of the present invention is described with reference to Figs. 1 to 9.

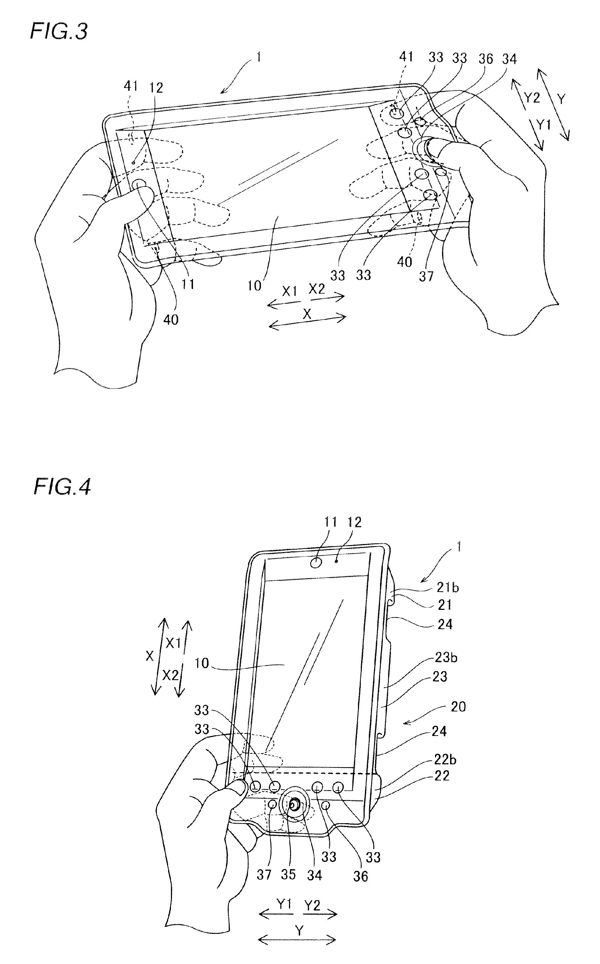

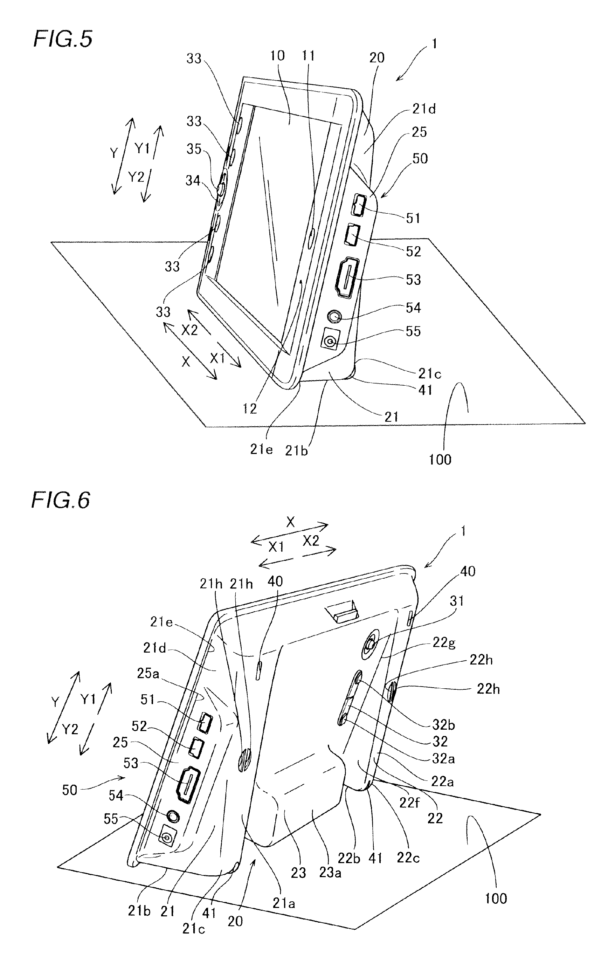

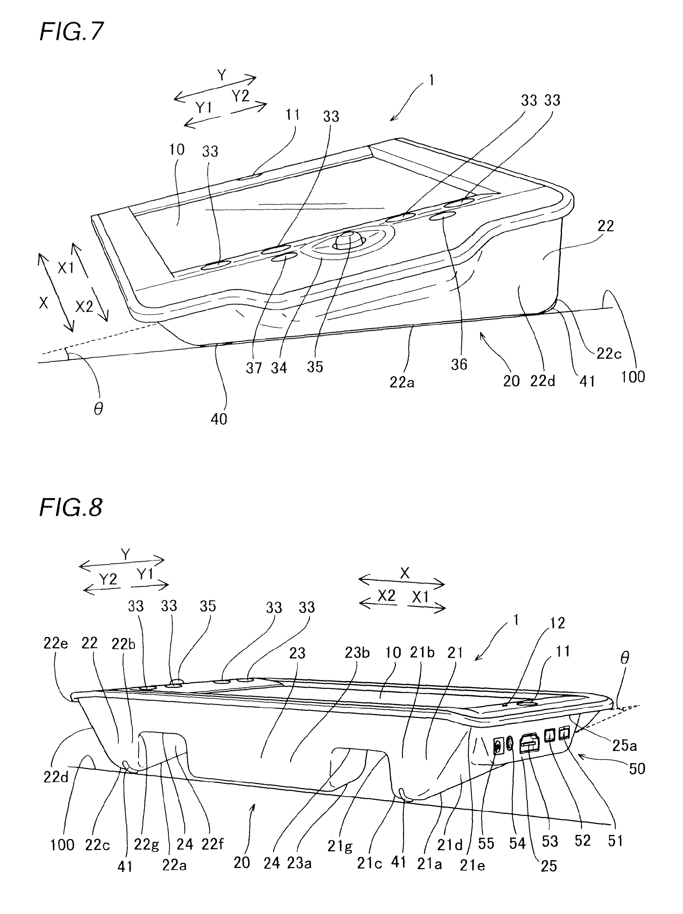

As shown in Figs. 1 and 2, the portable information display terminal 1 according to the embodiment of the present invention is mainly constituted of a liquid crystal display portion 10 (see Fig. 1) displaying information and a frame 20 provided with the liquid crystal display portion 10 on a surface thereof. The liquid crystal display portion 10 is an example of the "display portion" in the present invention, and the frame 20 is an example of the "housing" in the present invention. This portable information display terminal 1 is formed to be usable in a state (see Figs. 3 and 4) grasped by a user, and to be usable also in a state (see Figs. 5 and 6) standing up the frame 20 and the liquid crystal display portion 10 and in a state (see Figs. 7 to 9) laying down the frame 20 and the liquid crystal display portion 10.

More specifically, this portable information display terminal 1 is formed to be connectable to the Internet, and so formed that an E mail, a video chat, a voice chat and an IP telephone etc. are usable through the Internet connection. Further, the portable information display terminal 1 is so formed that the same functions as a remote control of an audio apparatus (not shown) and the portable information display terminal 1 itself is usable as an audiovisual apparatus also in a case where the same is not connected to the Internet. In addition, the portable information display terminal 1 is also usable as a digital photo frame and a monitor etc. in the state (see Figs. 5 and 6) standing up the frame 20 and the liquid crystal display portion 10, for example.

The liquid crystal display portion 10 has a touch panel function as shown in Fig. 1, and is so formed that the user is capable of performing an operation according to an application by pressing down operating buttons displayed on the liquid crystal display portion 10. Further, the liquid crystal display portion 10 is so formed that the direction of display is changeable in response to a used state of the portable information display terminal 1 such as the state (state of Figs. 5 and 6) standing up the frame 20 and the liquid crystal display portion 10, the state (state of Figs. 7 to 9) laying down the same, the state (state of Figs. 3 and 4) grasped by the user or the like. More specifically, an attitude sensor (not shown) sensing attitudes (placed states) of the frame 20 and the liquid crystal display portion 10 is provided in the frame 20, and the liquid crystal display portion 10 is formed to display information in a proper display direction according to the sensed attitudes (placed states) of the frame 20 and the liquid crystal display portion 10.

A camera unit 11 is set on a surface of the frame 20 on a side portion of a side end portion on an arrow X1 direction side (first side) in the longitudinal direction (direction X) of the liquid crystal display portion 10. The camera unit 11 is an example of the "camera portion" in the present invention. This camera unit 11 has a function of inputting images in a video chat in a case where the user uses the portable information display terminal 1 in the state grasped by him/her, for example. Further, the camera unit 11 has functions of a surveillance camera and a sensor sensing brightness etc. in the state (state of Figs. 5 and 6) standing up the frame 20 and the liquid crystal display portion 10.

A microphone unit 12 is set on a side portion of an arrow Y2 direction side (arrow Y2 direction side in the short-side direction (direction Y) of the frame 2) of the camera unit 11. This microphone unit 12 has a function of inputting voices in the voice chat, the video chat and the IP telephone etc., for example. Further, the microphone unit 12 inputs a voice in a voice memo, and also has a function as a sensor detecting an abnormal sound when used as a monitor.

The frame 20 is made of resin, as shown in Figs. 1 and 2. A plurality of protrusions 21, 22 and 23 are integrally provided on a surface of the frame 20 opposite to the surface provided with the liquid crystal display portion 10. The protrusions 21 and 22 are examples of the "support portion" or the "first support portion" in the present invention, and the protrusion 23 is an example of the "support portion", the "second support portion" or the "convexed portion" in the present invention.

According to this embodiment, the protrusion 21 is provided in the vicinity of an end portion on the arrow X1 direction side in the longitudinal direction (direction X) of the frame 20 to extend in the short-side direction (direction Y) of the frame 20, as shown in Fig. 2. The protrusion 22 is provided in the vicinity of an end portion on the arrow X2 direction side in the longitudinal direction (direction X) of the frame 20 to extend in the short-side direction (direction Y) of the frame 20. In other words, the protrusions 21 and 22 are provided in the vicinity of both end portions in the longitudinal direction (direction X) of the frame 20, and constitute grasp portions for grasping the frame 20 with the hands of the user in a state laterally directing the longitudinal direction (direction X) of the frame 20 and the liquid crystal display portion 10. The longitudinal direction (direction X) of the frame 20 is an example of the "first direction" in the present invention, and the short-side direction (direction Y) of the frame 20 is an example of the "second direction" in the present invention.

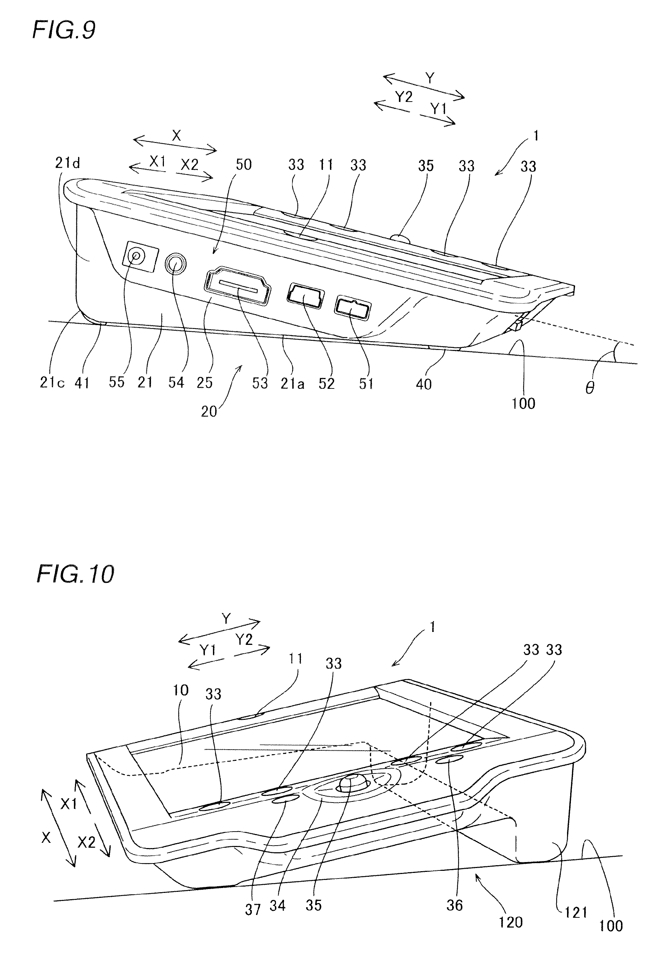

According to this embodiment, the protrusions 21 and 22 are so formed that the thicknesses gradually increase from end portion sides in the arrow Y1 direction of the frame 20 toward end portion sides in the arrow Y2 direction respectively, as shown in Figs. 7 and 9. Further, inclining surface portions 21a and 22a inclining at a prescribed angle θ from the end portion sides in the arrow Y1 direction toward the end portion sides in the arrow Y2 direction following the increase of the thicknesses are provided on the protrusions 21 and 22 respectively, as shown in Fig. 2. The inclining surface portions 21a and 22a are examples of the "top surface" in the present invention. In addition, bottom surface support portions 21b and 22b are provided on the protrusions 21 and 22, on the end portions of the inclining surface portions 21a and 22a on the arrow Y2 direction sides respectively. The protrusions 21 and 22 are formed to have wedge shapes taperingly diminishing from the arrow Y2 direction side toward the arrow Y1 direction side as viewed from the arrow X1 direction and the arrow X2 direction side respectively, as shown in Figs. 7 and 9. The bottom surface support portions 21b and 22b are examples of the "bottom portion support portion" in the present invention.

The protrusions 21 and 22 are so formed in the aforementioned manner that the frame 20 is supportable by the bottom surface support portion 21b of the protrusion 21 and the bottom surface support portion 22b of the protrusion 22 in the state standing up the frame 20 and the liquid crystal display portion 10, as shown in Figs. 5 and 6. In this case, display on the liquid crystal display portion 10 is so displayed that the arrow Y2 direction side is the lower direction. Further, the protrusions 21 and 22 are capable of supporting the frame 20 in a state inclining the frame 20 and the liquid crystal display portion 10 by the prescribed angle θ with respect to a placing surface 100 in the state laying down the frame 20 and the liquid crystal display portion 10 respectively, as shown in Figs. 7 to 9. In this case, the display on the liquid crystal display portion 10 is so displayed that the arrow Y1 direction side is the lower direction.

Further, the protrusions 21 and 22 are so formed in the aforementioned manner that the protrusions 21 and 22 are graspable with both hands while laterally directing the longitudinal direction (direction X) of the frame 20 and the liquid crystal display portion 10, as shown in Fig. 3. In this case, the protrusion 21 is grasped in a state where the forefinger or the like of the right hand of the user is attached thereto, while the protrusion 22 is grasped in a state where the forefinger or the like of the left hand of the user is attached thereto. As shown in Fig. 4, the protrusion 22 is graspable with one hand (left hand) while vertically directing the longitudinal direction (direction X) of the frame 20 and the liquid crystal display portion 10. In this case, the protrusion 22 is grasped in a state where the middle finger of the user is attached to a line (broken line portion in Fig. 4) 2 on the arrow X1 direction side of the protrusion 2.

As shown in Fig. 2, rubber feet 40 are mounted in the vicinity of the end portions on the arrow Y1 direction sides of the respective ones of the inclining surface portions 21a and 22a. Further, rubber feet 41 are mounted on a curved surface portion 21c connecting the inclining surface portion 21a and the bottom surface support portion 21b with each other and a curved surface portion 22c connecting the inclining surface portion 22a and the bottom surface support portion 22b with each other respectively. The rubber feet 41 are examples of the "bottom portion support portion" in the present invention. The rubber feet 40 and 41 are so provided in the aforementioned manner that the rubber feet 40 and 41 come into contact with the placing surface 100 in a case of placing the portable information display terminal 1 on the placing surface 100 in the state (state of Figs. 7 to 9) laying down the liquid crystal display portion 10 and the frame 20, whereby it becomes possible to place the portable information display terminal 1 on the placing surface 100 in a stable state. In a case of placing the portable information display terminal 1 on the placing surface 100 in the state (state of Figs. 5 and 6) standing up the liquid crystal display portion 10 and the frame 20, the rubber feet 41 come into contact with the placing surface 100, whereby it becomes possible to place the portable information display terminal 1 on the placing surface 100 in a stable state. The rubber feet 41 are provided to extend from the bottom surface support portions 21b and 22b opposed to the placing surface 100 in the state standing up the frame 20 and the liquid crystal display portion 10 to the inclining surface portions 21a and 22a opposed to the placing surface 100 in the state laying down the frame 20 and the liquid crystal display portion 10. Further, the rubber feet 40 and 41 are so formed that the forefingers are attached to the rubber feet 41 and the little fingers are attached to the rubber feet 40 so that the rubber feet 40 and 41 also serve as antislip members in a case where the same are grasped with both hands (case of Fig. 3) while laterally directing the longitudinal direction (direction X) of the liquid crystal display portion 10.

The protrusion 21 is so formed that a side surface 21d on an end portion side (arrow X1 direction end portion side) in the longitudinal direction (direction X) of the frame 20 inclines to spread from the inclining surface portion 21a toward a base portion 21e in the end portion direction (arrow X1 direction) of the frame 20, as shown in Fig. 8. The protrusion 22 is so formed that a side surface 22d on an end portion side (arrow X2 direction end portion side) in the longitudinal direction (direction X) of the frame 20 inclines to spread from the inclining surface 22a toward a base portion 22e in the end portion direction (arrow X2 direction) of the frame 20. The side surfaces 21d and 22d are examples of the "first side surface" in the present invention.

Further, the protrusion 21 is so formed that a side surface 21f on a center side (arrow X2 direction end portion side) in the longitudinal direction (direction X) of the frame 20 inclines to spread from the inclining surface portion 21a toward a base portion 21g in a center direction (arrow X2 direction) of the frame 20, as shown in Fig. 2. The angle of inclination of the base portion 21g of the side surface 21a of this protrusion 21 is larger than the angle of inclination of the side surface 21d of the protrusion 21. In other words, the side surface 21f is standing with respect to the back surface of the frame 20 as compared with the side surface 21d. The protrusion 22 is so formed that a side surface 22f on the center side (arrow X1 direction end portion side) in the longitudinal direction (direction X) of the frame 20 inclines to spread from the inclining surface portion 22a toward a base portion 22g in the center direction (arrow X1 direction) of the frame 20, as shown in Fig. 8. The angle of inclination of the base portion 22g of the side surface 22f of this protrusion 22 is larger than the angle of inclination of the side surface 22d of the protrusion 22. In other words, the side surface 22f is standing with respect to the back surface of the frame 20 as compared with the side surface 22d. The side surfaces 21f and 22f are examples of the "second side surface" in the present invention.

According to this embodiment, the protrusion 23 is provided in the vicinity of an arrow Y2 direction end portion in the short-side direction (direction Y) of the frame 20 and between the protrusions 21 and 22, as shown in Fig. 2. Further, the protrusion 23 has a convexed shape protruding in a direction opposite to the surface provided with the liquid crystal display portion 10, and protrudes in a direction similar to the direction where the protrusions 21 and 22 protrude independently of the protrusions 21 and 22. In other words, recess portions 24 are provided between the protrusions 21 and 22 and the protrusion 23. A chargeable secondary battery (lithium ion battery) for supplying power to the portable information display terminal 1 is built (stored) in this protrusion 23. The protrusion 23 is so formed, in a case where the user grasps the left side (arrow Y1 direction side) of the frame 20 with his/her left hand so that the longitudinal direction (direction X) of the frame 20 is the vertical direction and the liquid crystal display portion 10 is on the front side as shown in Fig. 4, as to be positioned on a right-side (arrow Y2 direction side) portion opposite to the left hand of the user.

An inclining surface portion 23a inclining at an angle of inclination substantially identical to that of the inclining surface portions 21a and 22a is provided on the protrusion 23, as shown in Fig. 2. Further, a bottom surface support portion 23b connecting an arrow Y2 direction side end portion of the inclining surface portion 23a and the vicinity of the portion of the frame 20 provided with the liquid crystal display portion 10 with each other is provided on the protrusion 23. This bottom surface support portion 23b is formed to be positioned on a plane substantially identical to those of the bottom surface support portions 21b and 22b of the protrusions 21 and 22. The bottom surface support portion 23b is an example of the "bottom portion support portion" in the present invention. The protrusion 23 is so formed in the aforementioned manner that it is possible to support the frame 20 with the bottom surface support portion 23b along with the bottom surface support portion 21b of the protrusion 21 and the bottom surface support portion 22b of the protrusion 22 in the state (see Figs. 5 and 6) standing up the frame 20 and the liquid crystal display portion 10. Further, the protrusion 23 is capable of supporting the frame 20 in the state inclining the frame 20 and the liquid crystal display portion 10 by the prescribed angle θ with respect to the placing surface 100 along with the protrusions 21 and 22, in the state (see Figs. 7 to 9) laying down the frame 20 and the liquid crystal display portion 10.

Openings 21h and 22h for outputting voices are provided on the inclining surface portions 21a and 22a of the protrusions 21 and 22 respectively. Unshown speakers are built in the openings 21h and 22h respectively. These unshown speakers have functions of outputting various warning sounds, various sound files and sounds in music playback, video playback, a voice chat, a video chat and Internet radio playback etc., for example.

A power supply switch 31 and a volume switch 32 are provided on portions on the arrow X1 direction side of the protrusion 22. The power supply switch 31 is so formed that the user can turn on and off a main power source and screen display by pressing the same. More specifically, the power supply switch 31 is formed to turn on or off the main power source for the portable information display terminal 1 in a case where the same is long-pressed. Further, the power supply switch 31 is formed to switch the screen display on the liquid crystal display portion 10 to on or off in a case where the same is pressed (short-pressed) in a pressing time shorter than that in the long-press.

The volume switch 32 is provided on an arrow Y2 direction side of the power supply switch 31, and has a function of increasing/decreasing the volumes of sounds of the speakers (not shown) or the like output from the openings 21h and 22h. The volume switch 32 is a seesaw switch, and has a first switch portion 32a and a second switch portion 32b. It is possible to increase the volumes by pressing one of the first switch portion 32a and the second switch portion 32b, and it is possible to decrease the volumes by pressing the other one of the first switch portion 32a and the second switch portion 32b. Further, the volume switch 32 is formed to increase/decrease the volume of a sound output from an earphone (not shown), a headphone (not shown) or the like in a case where the earphone (not shown), the headphone (not shown) or the like is connected to a voice cable connection portion 54 (see Fig. 5) described later. In addition, the volume switch 32 is formed to increase/decrease the volume level of sound data output from an HDMI connection portion 53 without directly controlling the sound of a television set (not shown) in a case where the television set (not shown) or the like is connected to the HDMI connection portion 53 (see Fig. 5) described later.

Various switches 33 for an information processor mode are provided on portions on the arrow X2 direction side (second side) of the liquid crystal display portion 10, as shown in Fig. 1. The various switches 33 for the information processor mode are examples of the "switch portion" in the present invention. The various switches 33 for the information processor mode are switches used in the information processor mode for an E mail, video and voice chats and an IP telephone etc. other than in a remote control operation mode for the audio apparatus (not shown) respectively. A four-way movable switch 34 (selection switch) is provided in the vicinity of arrow X2 direction sides of the various switches 33 for the information processor mode. A decision switch 35 is provided on a central portion of the four-way movable switch 34. The four-way movable switch 34 and the decision switch 35 are formed to be usable in both of the remote control operation mode and the information processor mode respectively. The four-way movable switch 34 is formed to select a prescribed command displayed on the liquid crystal display portion 10 or the like, while the decision switch 35 is formed to decide the selected command.

A remote control mode transition switch 36 capable of switching the remote control operation mode and the information processor mode is provided on the arrow Y2 direction side of the four-way movable switch 34. A return function switch 37 for returning an operation screen OS-displayed on a display portion of a remote control operation object apparatus (television or the like) in the remote control mode from the current state to an immediately precedent state is provided on the arrow Y1 direction side of the four-way movable switch 34.

As shown in Fig. 5, a side surface portion 25 is provided to protrude on a side end portion (arrow X1 direction side end portion) in the longitudinal direction of the frame 20. The side surface portion 25 is an example of the "third side surface" in the present invention. A plurality of connection portions 50 capable of inputting/outputting information are provided on the side surface portion 25. The connection portions 50 are examples of the "input/output terminal portion" in the present invention. These connection portions 50 include two USB connection portions 51 and 52, the HDMI connection portion 53, the voice cable connection portion 54 and a power supply connector 55. As shown in Fig. 8, the angle of inclination of a base portion 25a of the side surface portion 25 is larger than the angle of inclination of the side surface 21d of the protrusion 21. In other words, the side surface portion 25 is standing with respect to the back surface of the frame 20 as compared with the side surface 21d.

The two USB connection portions 51 and 52 are provided for connecting the portable information display terminal 1 to an external apparatus (not shown) through unshown USB cables respectively, as shown in Fig. 5. The HDMI connection portion 53 is formed to be capable of transmitting images and sound data to the television set (not shown) or the like in a case where the same is connected to the television set (not shown) or the like through an unshown HDMI cable. In the case where the HDMI connection portion 53 is connected to the television set (not shown) or the like through the unshown HDMI cable, no sounds are output from the unshown speakers built in the aforementioned openings 21h and 22h, but sounds are output from a speaker of the television set (not shown) or the like. The voice cable connection portion 54 is so formed that the earphone (not shown), the headphone (not shown) or the like is connectable thereto. The power supply connector 55 is provided for incorporating power into the portable information display terminal 1.

According to this embodiment, as hereinabove described, the protrusions 21, 22 and 23 larger in thickness on the first end portion sides (arrow Y2 direction sides) than on the second end portion sides (arrow Y1 direction sides) are integrally provided on the surface of the frame 20 opposite to the surface provided with the liquid crystal display portion 10 so that the protrusions 21, 22 and 23 support the frame 20 on the side of the frame 20 opposite to the surface provided with the liquid crystal display portion 10 in the case of the state laying down the frame 20 and the liquid crystal display portion 10, whereby the frame 20 can be stably supported in a state where the liquid crystal display portion 10 inclines by the prescribed angle θ with respect to the placing surface 100 so that the first end portion side (arrow Y2 direction side) heightens and the liquid crystal display portion 10 is directed upward (toward the user side). Further, the bottom portion support portions (the bottom surface support portions 21b, 22b and 23b and the rubber feet 41) are so provided on the protrusions 21, 22 and 23 on the first end portion side (arrow Y2 direction side) of the frame 20 that it is possible to support the frame 20 in a state placing the first end portion side (arrow Y2 direction side) of the frame 20 on the placing surface 100 and in the state standing up the liquid crystal display portion 10 in the case of standing up the frame 20 and the liquid crystal display portion 10. Thus, the portable information display terminal 1 stably supportable and usable in both of at least a stood-up state and a laid-down state can be obtained.

According to this embodiment, as hereinabove described, the protrusions 21 and 22 capable of constituting the grasp portions for manually grasping the frame 20 in the state laterally directing the longitudinal direction (direction X) of the frame 20 and the liquid crystal display portion 10 are provided in the vicinity of the end portions in the longitudinal direction (direction X) of the frame 20, whereby the user can operate the portable information display terminal 1 not only in the state standing up the frame 20 and the liquid crystal display portion 10 and the state laying down the frame 20 and the liquid crystal display portion 10, but also in the state manually grasping the protrusions 21 and 22 of the frame 20.

According to this embodiment, as hereinabove described, the protrusions 21 and 22 are provided in the vicinity of both end portions in the longitudinal direction (direction X) of the frame 20, whereby the user can grasp the portable information display terminal 1 in a stable state by grasping the protrusions 21 and 22 of two places provided in the vicinity of both end portions in the longitudinal direction (direction X) of the frame 20 with both hands.

According to this embodiment, as hereinabove described, the protrusions 21 and 22 are so provided that the thicknesses gradually increase from the second end portion side (arrow Y1 direction side) of the frame 20 toward the first end portion side (arrow Y2 direction side), whereby the frame 20 can be supported in the state inclining the frame 20 and the liquid crystal display portion 10 by the prescribed angle θ with respect to the placing surface 100 to gradually heighten from the second end portion side (arrow Y1 direction) of the frame 20 toward the first end portion side (arrow Y2 direction) in the case of laying down the frame 20 and the liquid crystal display portion 10.

According to this embodiment, as hereinabove described, the protrusion 23 provided in the vicinity of the first (arrow Y2 direction) end portion in the short-side direction (direction Y) of the frame 20 substantially orthogonal to the longitudinal direction (direction X) of the frame 20 is so provided that the frame 20 can be supported by the protrusion 23 provided in the vicinity of the first (arrow Y2 direction) end portion in the short-side direction (direction Y) of the frame 20 in both of the state standing up the frame 20 and the liquid crystal display portion 10 and the state laying down the frame 20 and the liquid crystal display portion 10.

According to this embodiment, as hereinabove described, the protrusion 23 is provided in the convexed shape protruding from the vicinity of the first (arrow Y2 direction) end portion in the short-side direction (direction Y) of the frame 20, whereby the frame 20 can be supported in the state inclining the frame 20 and the liquid crystal display portion 10 by the prescribed angle θ with respect to the placing surface 100 so that the first (arrow Y2 direction) end portion in the short-side direction (direction Y) of the frame 20 heightens due to the convexed shape protruding from the vicinity of the first (arrow Y2 direction) end portion in the short-side direction (direction Y) of the frame 20 in the case of laying down the frame 20 and the liquid crystal display portion 10.

According to this embodiment, as hereinabove described, the protrusion 23 is so formed that the battery is storable therein, whereby the protrusion 23 can be employed both as a support portion supporting the frame 20 and a battery storage portion. Further, the protrusion 23 is so formed that the battery is storable therein so that the protrusion 23 storing the secondary battery which is a heavy object is positioned in the vicinity of the placing surface 100 in the case of placing the portable information display terminal 1 on the placing surface 100 in the state standing up the liquid crystal display portion 10 and the frame 20, whereby the center of gravity of the portable information display terminal 1 in the state standing up the frame 20 and the liquid crystal display portion 10 can be lowered toward the side of the placing surface 100. Thus, the frame 20 can be more stably supported also in the state standing up the frame 20 and the liquid crystal display portion 10.

According to this embodiment, as hereinabove described, the recess portions 24 are so provided between the protrusions 21 and 22 and the protrusion 23 that the user can grasp the protrusions 21 and 22 by putting his/her fingers on the recess portions 24 between the protrusions 21 and 22 and the protrusion 23, whereby he/she can grasp the frame 20 in a stable state.

According to this embodiment, as hereinabove described, the protrusion 23 is arranged to be positioned on the right-side portion opposite to the left hand of the user in a case where the user grasps the left side of the frame 20 with his/her left hand so that the longitudinal direction of the frame 20 is the vertical direction and the liquid crystal display portion 10 is on the front side. The user (particularly a right-handed user) frequently operates a touch panel or the like with his/her right hand in the state grasping the frame 20 with his/her left hand, and in such a case, the protrusion 23 is arranged to be positioned on the right-side portion opposite to the left hand of the user so that the protrusion 23 is not obstructive when the user grasps the frame 20 with his/her left hand, whereby the user can easily grasp the frame 20 with his/her left hand.

According to this embodiment, as hereinabove described, the liquid crystal display portion 10 is so formed that the direction of display is changeable in response to the used state, whereby the user can visually recognize the display responsive to the used state regardless of the states of placing of the frame 20 and the liquid crystal display portion 10.

According to this embodiment, as hereinabove described, the liquid crystal display portion 10 is formed to display images so that the first end portion side (arrow Y2 direction side) of the frame 20 is downward in the state standing up the frame 20 and the liquid crystal display portion 10 and to display images so that the second end portion side (arrow Y1 direction side) of the frame 20 opposite to the first end portion side (arrow Y2 direction side) of the frame 20 is downward in the state laying down the frame 20 and the liquid crystal display portion 10 in the state inclining the same by the prescribed angle with respect to the placing surface 100, whereby display in directions suitable to arrangement states in both of the state standing up the frame 20 and the liquid crystal display portion 10 and the state inclining the frame 20 and the liquid crystal display portion 10 by the prescribed angle with respect to the placing surface 100 can be obtained.

According to this embodiment, as hereinabove described, the rubber feet 40 and 41 for stably placing the frame 20 on the placing surface 100 in the state standing up the frame 20 and the liquid crystal display portion 10 and for stably placing the frame 20 on the placing surface 100 in the state laying down the frame 20 and the liquid crystal display portion 10 are provided on the protrusions 21 and 22 so that the rubber feet 40 and 41 can inhibit the frame 20 from slipping with respect to the placing surface 100 in both of the state standing up the frame 20 and the liquid crystal display portion 10 and the state laying down the frame 20 and the liquid crystal display portion 10, whereby the frame 20 can be stably placed on the placing surface 100.

According to this embodiment, as hereinabove described, the rubber feet 41 are provided to extend from the bottom surface support portions 21b and 22b opposed to the placing surface 100 in the state standing up the frame 20 and the liquid crystal display portion 10 to the inclining surface portions 21a and 22a opposed to the placing surface 100 in the state laying down the frame 20 and the liquid crystal display portion 10 so that the rubber feet 41 can be employed in both of the state standing up the frame 20 and the liquid crystal display portion 10 and the state laying down the frame 20 and the liquid crystal display portion 10, whereby the number of components can be inhibited from increasing, dissimilarly to a case of providing rubber feet for the state standing up the frame 20 and the liquid crystal display portion 10 and rubber feet for the state laying down the frame 20 and the liquid crystal display portion 10 separately from each other respectively.

According to this embodiment, as hereinabove described, the protrusions 21 and 22 are so formed that the side surfaces 21d and 22d on both end portion sides in the direction X incline to spread from the inclining surface portions 21a and 22a toward the base portions 21e and 22e respectively in both end portion directions in the direction X so that the user can easily fit his/her fingers along the side surfaces 21d and 22d inclining to spread from the inclining surface portions 21a and 22a of the protrusions 21 and 22 toward the base portions 21e and 22e in the end portion directions in the direction X when manually grasping the protrusions 21 and 22 of the frame 20 in the state laterally directing the longitudinal direction (direction X), whereby he/she can grasp the frame 20 in a stable state.

According to this embodiment, as hereinabove described, the angles of inclination of the base portions 21g and 22g of the side surfaces 21f and 22f of the protrusions 21 and 22 are rendered larger than the angles of inclination of the side surfaces 21d and 22d of the protrusions 21 and 22 so that the user can put his/her fingers on the side surfaces 21f and 22f having the angles of inclination larger than the angles of inclination of the base portions 21g and 22g of the side surfaces 21d and 22d of the protrusions 21 and 22 when manually grasping the protrusions 21 and 22 of the frame 20 in the state laterally directing the longitudinal direction, whereby he/she can grasp the frame 20 in a stable state.

According to this embodiment, as hereinabove described, the side surface portion 25 is provided to protrude on the end portion sides in the longitudinal direction of the side surfaces 21d and 22d of the protrusions 21 and 22 while the connection portions 50 capable of inputting/outputting information are provided on the side surface portion 25 and the angle of inclination of the base portion 25a of the side surface portion 25 is rendered larger than the angles of inclination of the base portions 21g and 22g of the side surface portions 21d and 22d so that the side surface portion 25 protrudes from the side surface 21d in the state where the angle of inclination of the base portion 25a is large, whereby the connection portions 50 can be provided on the side surface portion 25 in such arrangement that connection terminals of the external apparatus are easily connected thereto.

According to this embodiment, as hereinabove described, the openings 21h and 22h for outputting sounds output from the inner side of the frame 20 are formed on the protrusions 21 and 22, whereby the sounds output from the speakers can be easily externally output through the openings 21h and 22h in the case where the portable information display terminal 1 includes the speakers outputting sounds in the frame 20.

According to this embodiment, as hereinabove described, the camera unit 11 is provided on the first side (arrow X1 direction side) in the longitudinal direction (direction X) of the frame 20 so that the camera unit 11 is used in a state where the frame 20 is stably supported in both of the laid-down state and the stood-up state, whereby the face or the like of the user can be easily photographed.

According to this embodiment, as hereinabove described, the various switches 33 for the information processor mode for performing prescribed operations are provided on the second side (arrow X2 direction side) in the longitudinal direction (direction X) of the frame 20, whereby the hand of the user operating the various switches 33 for the information processor mode can be inhibited from blocking the field of view of the camera unit 11 provided on the first side (arrow X1 direction side) in the longitudinal direction of the frame 20 when the user operates the various switches 33 for the information processor mode.

According to this embodiment, as hereinabove described, the liquid crystal display portion 10 is provided with the touch panel function, whereby the user can easily operate the portable information display terminal 1 by employing the touch panel function.

The embodiment disclosed this time must be considered as illustrative in all points and not restrictive. The range of the present invention is shown not by the above description of the embodiment but by the scope of claims for patent, and all modifications within the meaning and range equivalent to the scope of claims for patent are further included.

For example, while the example of providing the protrusions for manually grasping the frame on both end portions in the longitudinal direction of the frame has been shown in the aforementioned embodiment, the present invention is not restricted to this. A protrusion for manually grasping the frame may be provided on a first side end portion in the longitudinal direction of the frame.

While the example of forming the protrusions (21 and 22) so that the thicknesses gradually increase from the first sides in the short-side direction of the frame toward the second sides has been shown in the aforementioned embodiment, the present invention is not restricted to this. If it is possible to support a frame in a state inclining the frame and a liquid crystal display portion by a prescribed angle with respect to a placing surface as in a modification of the aforementioned embodiment shown in Fig. 10, a protrusion 121 may be provided only on a first side (arrow Y2 direction side) in the short-side direction (direction Y) of a frame 120, for example. This protrusion 121 is formed to extend in the longitudinal direction (direction X) of the frame 120.

While the example of providing the protrusions (21 and 22) for manually grasping the frame on both end portions in the longitudinal direction of the frame has been shown in the aforementioned embodiment, the present invention is not restricted to this. A protrusion for manually grasping the frame may be provided on at least a first end portion side in the short-side direction of the frame.

While the example of providing the protrusions 21 and 22 and the protrusion 23 in the form of independent protrusions has been shown in the aforementioned embodiment, the present invention is not restricted to this. For example, the protrusions 21 and 22 and the protrusion 23 may be formed to have integral protrusion shapes.

While the example of providing the protrusions on both end portions in the longitudinal direction of the liquid crystal display portion and on the first end portion in the short-side direction has been shown in the aforementioned embodiment, the present invention is not restricted to this. For example, a protrusion inclining by the prescribed angle in the short-side direction may be provided on the overall surface of the frame opposite to the surface provided with the liquid crystal display portion, to be formed to be capable of supporting the frame in the state inclining the frame and the liquid crystal display portion by the prescribed angle with respect to the placing surface.

While the example of providing the rubber feet on the frame has been shown in the aforementioned embodiment, the present invention is not restricted to this. Projecting portions may be provided integrally with the frame in place of the rubber feet provided on the frame in the aforementioned embodiment. In this case, the projecting portions come into point contact with the placing surface, whereby it is possible to stably place the frame on the placing surface without backlash.

While the example of forming the portable information display terminal to increase/decrease the volume level of the sound data output from the HDMI connection portion in the case of operating the volume switch in the case where the television set or the like is connected to the HDMI connection portion has been shown in the aforementioned embodiment, the present invention is not restricted to this. For example, the quantity of information of the maximum volume level of the sound data may be transmitted to the HDMI-connected television set or the like while the volume switch may be rendered incapable of increasing/decreasing the volume level of the sound data in the case where the television set or the like is connected to the HDMI connection portion. In this case, it is possible to control the volume with a volume switch of the HDMI-connected television set. Further, it becomes possible to suppress deterioration of the sound data transmitted to the television set by transmitting the maximum quantity of information of the sound data to the HDMI-connected television set or the like.

## Claims

1. A portable information display terminal (1) comprising:
a display portion (10) displaying information; and
a housing (20) provided with said display portion on a surface, wherein
a support portion (21, 22, 23) having a larger thickness than on a second end portion side is integrally provided at least on a first end portion side on a surface of said housing opposite to the surface provided with said display portion, and
said support portion is formed to be capable of supporting said housing by constituting a bottom portion support portion (21b, 22b, 23b) in a state standing up said housing and said display portion and to be capable of supporting said housing in a state inclining said housing and said display portion by a prescribed angle with respect to a placing surface (100) in a state laying down said housing and said display portion.

2. The portable information display terminal according to claim 1, wherein
said support portion includes a first support portion (21, 22) provided in the vicinity of an end portion in a first direction of said housing and capable of constituting a grasp portion for manually grasping said housing in a state laterally directing the first direction of said housing and said display portion.

3. The portable information display terminal according to claim 2, wherein
said first support portions are provided in the vicinity of both end portions in the first direction of said housing.

4. The portable information display terminal according to claim 2, wherein
said first support portion is so formed that the thickness gradually increases from the second end portion side of said housing toward the first end portion side.

5. The portable information display terminal according to claim 2, wherein
said support portion includes a second support portion (23) provided in the vicinity of a first end portion in a second direction of said housing substantially orthogonal to the first direction of said housing.

6. The portable information display terminal according to claim 5, wherein
said second support portion includes a convexed portion protruding from the vicinity of the first end portion in the second direction of said housing.

7. The portable information display terminal according to claim 6, wherein
the convexed portion constituting said second support portion is so formed that a battery is storable therein.

8. The portable information display terminal according to claim 5, wherein
a recess portion (24) is provided between said first support portion and said second support portion.

9. The portable information display terminal according to claim 5, wherein
said second support portion is so arranged, in a case where a user grasps the left side of said housing with his/her left hand so that the first direction of said housing is the vertical direction and said display portion is on the front side, as to be positioned on a right-side portion opposite to the left hand of said user.

10. The portable information display terminal according to claim 1, wherein
said display portion is so formed that the direction of display is changeable in response to a used state.

11. The portable information display terminal according to claim 10, wherein
said support portion includes a first support portion (21, 22) provided in the vicinity of an end portion in a first direction of said housing and capable of constituting a grasp portion for manually grasping said housing in a state laterally directing the first direction of said housing and said display portion,
said first support portion is so provided that the thickness gradually increases from the second end portion side of said housing toward the first end portion side, and
said display portion is formed to display an image so that the first end portion side of said housing is downward in the state standing up said housing and said display portion and to display an image so that the second end portion side of said housing opposite to the first end portion side of said housing is downward in the state laying down said housing and said display portion in the state inclining said housing and said display portion by the prescribed angle with respect to said placing surface.

12. The portable information display terminal according to claim 1, wherein
an antislip member (40, 41) for stably placing said housing on the placing surface in the state standing up said housing and said display portion and for stably placing said housing on the placing surface in the state laying down said housing and said display portion is provided on said support portion.

13. The portable information display terminal according to claim 12, wherein
said antislip member (41) is provided to extend from a surface (21b, 22b) of said support member opposed to the placing surface in the state standing up said housing and said display portion to a surface (21a, 22a) of said support member opposed to the placing surface in the state laying down said housing and said display portion.

14. The portable information display terminal according to claim 2, wherein
said first support portion is so formed that a first side surface (21d, 22d) of said first support portion on the end portion side in the first direction of said housing inclines to spread from a top surface (21a, 22a) of said first support portion toward a base portion (21e, 22e) in the direction of the end portion in the first direction of said housing.

15. The portable information display terminal according to claim 14, wherein
said first support portion is so formed that a second side surface (21f, 22f) of said first support portion on a center side in the first direction of said housing inclines to spread from the top surface of said first support portion toward a base portion (21g, 22g) in a center direction in the first direction of said housing, and
an angle of inclination of the base portion of the second side surface of said first support portion is larger than an angle of inclination of the first side surface of said first support portion.

16. The portable information display terminal according to claim 14, wherein
a third side surface (25) is provided to protrude on an end portion side of the first side surface of said first support portion in the first direction of said housing,
an input/output terminal portion (50) capable of inputting/outputting information is provided on said third side portion, and
an angle of inclination of a base portion 25a of said third side surface is larger than the angle of inclination of the base portion of said first side surface.

17. The portable information display terminal according to claim 2, wherein
an opening (21h, 22h) for outputting a sound output from the inner side of said housing outward is provided on said first support portion.

18. The portable information display terminal according to claim 1, further comprising a camera portion (11) provided on a first side in the first direction of said housing.

19. The portable information display terminal according to claim 18, further comprising a switch portion (33, 34, 35, 36, 37) provided on a second side in the first direction of said housing for performing a prescribed operation.

20. The portable information display terminal according to claim 1, wherein
said display portion has a touch panel function.
